# EUROPEAN PATENT APPLICATION

(11) **EP 4 517 947 A1**
(43) Date of publication of application: **05.03.2025**
(21) Application number: 23893309.7
(22) Date of filing: 23.08.2023
(51) Int. Cl.: H01M 50/107, H01M 10/0587

(54) **BATTERY CELL, BATTERY AND ELECTRIC DEVICE**

(30) Priority: 24.11.2022 CN 202223134659 U
(71) Applicant: Contemporary Amperex Technology (Hong Kong) Limited, Hong Kong (HK)
(72) Inventor: CHEN, Xingbu, Ningde, Fujian 352100 (CN); SUN, Xin, Ningde, Fujian 352100 (CN); WU, Lili, Ningde, Fujian 352100 (CN); LIU, Rundie, Ningde, Fujian 352100 (CN); SONG, Peidong, Ningde, Fujian 352100 (CN)
(74) Representative: Gong, Jinping
(86) International application number: PCT/CN2023/114484
(87) International publication number: WO 2024/109215

(57) **Abstract**

This application provides a battery cell, a battery, and an electrical device. The battery cell includes an electrode assembly. The electrode assembly is wound along a winding direction to form a jelly-roll structure containing a roll core cavity in a central region. The battery cell further includes a gel-state central column packed in the roll core cavity and formed by coagulation. The central roll core cavity formed by winding the electrode assembly is packed with the gel material that coagulates to form a gel-state central column. In this way, the central column can support the electrode assembly after coagulating in shape, thereby improving the deformation resistance of the electrode assembly, and reducing the risk of central collapse of the electrode assembly. In addition, when the electrode assembly is squeezed, the central column can serve as an elastic cushion to some extent. When the electrode assembly swells and squeezes during charging and discharging, the central column can adapt to the compression deformation of the electrode assembly, thereby further improving the deformation resistance of the electrode assembly, and in turn, reducing the risk of central collapse and deformation of the electrode assembly, and effectively increasing the service life of the battery cell.

## Description

This application claims priority to Chinese Patent Application No. 202223134659.5, filed with the China National Intellectual Property Administration on November 24, 2022 and entitled "BATTERY CELL, BATTERY, AND ELECTRICAL DEVICE", which is incorporated herein by reference in its entirety.

### TECHNICAL FIELD

This application relates to the technical field of batteries, and in particular, to a battery cell, a battery, and an electrical device.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

After an electrode assembly of a cylindrical cell is formed by winding, a roll core cavity is formed at the center, thereby posing a relatively high risk of collapse at the center of the electrode assembly after the cylindrical cell is produced, and impairing the service life of the battery cell.

### SUMMARY

An objective of some embodiments of this application is to provide a battery cell, a battery, and an electrical device to reduce the risk of central collapse of an electrode assembly and increase the service life of the battery cell.

According to a first aspect, an embodiment of this application provides a battery cell. The battery cell includes an electrode assembly. The electrode assembly is wound along a winding direction to form a jelly-roll structure containing a roll core cavity in a central region. The battery cell further includes a gel-state central column packed in the roll core cavity and formed by coagulation.

In the technical solution disclosed herein, the central roll core cavity formed by winding the electrode assembly is packed with the gel material that coagulates to form a gel-state central column. In this way, the central column can support the electrode assembly after coagulating in shape, thereby improving the deformation resistance of the electrode assembly, and reducing the risk of central collapse of the electrode assembly. In addition, when the electrode assembly is squeezed, the central column can serve as an elastic cushion to some extent. Moreover, when the electrode assembly swells and squeezes during charging and discharging, the central column can adapt to the compression deformation of the electrode assembly, thereby further improving the deformation resistance of the electrode assembly, and in turn, reducing the risk of central collapse and deformation of the electrode assembly, and effectively increasing the service life of the battery cell.

In some embodiments, the battery cell further includes a shaping sleeve. The shaping sleeve is configured to shape a gel material packed in the roll core cavity to form the central column. The shaping sleeve is disposed in the roll core cavity. The central column is disposed in the shaping sleeve.

Through the above structural design, a shaping sleeve is disposed in the roll core cavity of the electrode assembly. The gel material for making the central column can be packed into the shaping sleeve to moderately avoid or reduce the outflow of the gel material, thereby facilitating coagulation of the gel material to form the central column, reducing the interference of the gel material to other positions on the electrode assembly, and moderately ensuring high quality and performance of the manufactured battery cell.

In some embodiments, the shaping sleeve includes a partition film affixed to an inner surface of the roll core cavity.

Through the above structural design, a partition film is affixed to the inner surface of the roll core cavity to moderately avoid or reduce the outflow of the gel material. The production is convenient, and the space occupied by the partition film is small. In this way, when the volume of the roll core cavity is constant, the volume of the electrode assembly can be made larger, thereby increasing the energy density of the battery cell. When the volume of the electrode assembly is constant, the roll core cavity can be made larger. In this way, the diameter of the central column can be made larger, so as to increase the structural strength of the central column, and in turn, improve the deformation resistance of the electrode assembly.

In some embodiments, the partition film possesses a property of resistance to penetration by an electrolyte solution.

Through the above structural design, the partition film resistant to penetration by the electrolyte solution is used, thereby reducing or moderately eliminating the possibility that the electrolyte solution in the battery cell enters the roll core cavity, reducing or moderately avoiding the interference of the electrolyte solution to the central column, and in turn, moderately ensuring a high deformation resistance of the electrode assembly.

In some embodiments, the shaping sleeve includes an elastic sleeve. The elastic sleeve is disposed in the roll core cavity.

Through the above structural design, an elastic sleeve is disposed in the roll core cavity. The elastic sleeve constrains the gel material for making the central column, so as to moderately avoid or reduce the outflow of the gel material, and coagulate the gel material to form the central column. In this way, the central column and the elastic sleeve can act as a whole to support the electrode assembly, and can adapt to the swelling and squeezing of the electrode assembly, thereby improving the deformation resistance of the electrode assembly and moderately ensuring a long service life of the battery cell.

In some embodiments, the elastic sleeve is a metal sleeve or a plastic sleeve.

Through the above structural design, a metal sleeve is used as an elastic sleeve, and the elastic sleeve can be downsized. In this way, when the volume of the roll core cavity is constant, the volume of the electrode assembly can be made larger, thereby increasing the energy density of the battery cell. When the volume of the electrode assembly is constant, the roll core cavity can be made larger. In this way, the diameter of the central column can be made larger, so as to increase the structural strength of the central column, and in turn, improve the deformation resistance of the electrode assembly. The plastic sleeve used as an elastic sleeve is cost-effective and easy to manufacture.

In some embodiments, a cross-section of the elastic sleeve is spiral or ring-shaped.

Through the above structural design, the elastic sleeve is in a spiral shape. When the electrode assembly swells and squeezes, the volume of the roll core cavity becomes smaller, and the elastic sleeve can deform more adaptively to adapt to the swelling and squeezing of the electrode assembly, thereby reducing the interference caused to the electrode assembly, and in turn, moderately ensuring a high level of performance and lifespan of the battery cell. The elastic sleeve with a ring-shaped cross-section is simple in structure and easy to manufacture.

In some embodiments, an inner diameter of the shaping sleeve is less than an inner diameter of the roll core cavity of the non-swollen electrode assembly, and the inner diameter of the shaping sleeve is greater than or equal to the inner diameter of the roll core cavity of the swollen electrode assembly.

Through the above structural design, after the shaping sleeve constrains the gel material to coagulate into a central column, the shaping sleeve and the central column as a whole can not only well support the electrode assembly and moderately ensure a high deformation resistance of the electrode assembly, but also provide some expansion space when the electrode assembly swells during charging and discharging, thereby moderately avoiding the bulging of the battery cell caused by an excessive reverse force exerted by the central column on the electrode assembly.

In some embodiments, the electrode assembly includes a first electrode plate and a second electrode plate opposite to each other in polarity and stacked up, and a separator configured to separate the first electrode plate from the second electrode plate. A reinforcement section is disposed on the first electrode plate. The reinforcement section is wound around to form the roll core cavity.

Through the above structural design, a reinforcement section is disposed on the first electrode plate, and the reinforcement section is wound to form a roll core cavity. In this way, the reinforcement section can increase the structural strength of the center of the electrode assembly and improve the deformation resistance of the electrode assembly. Moreover, the reinforcement section can moderately eliminate or reduce the probability that the gel material flows out of the roll core cavity, thereby making it convenient for the gel material to coagulate into a central column. Further, the reinforcement section can coordinate with the central column to improve the deformation resistance of the electrode assembly.

In some embodiments, the reinforcement section is wound into at least one coil.

Through the above structural design, the reinforcement section is wound into at least one coil. This design moderately ensures that the roll core cavity formed by winding the reinforcement section can constrain the gel material properly. The reinforcement section wound into a plurality of coils not only constrains the gel material but also increases the deformation resistance of the electrode assembly.

In some embodiments, in the same coil of the electrode assembly, the first electrode plate is positioned more internally than the second electrode plate.

Through the above structural design, because a reinforcement section is disposed on the first electrode plate and the reinforcement section is wound to form a roll core cavity, the arrangement of the first electrode plate positioned more internally than the second electrode plate makes the reinforcement section closer to the inside of the electrode assembly, thereby not only making it convenient for the reinforcement section to wind into a roll core cavity, but also reducing the footprint of the reinforcement section.

In some embodiments, the battery cell further includes a protection film affixed to a bottom of the electrode assembly to cover the roll core cavity.

Through the above structural design, a protection film is disposed to cover the bottom of the roll core cavity. In this way, in a process of packing the roll core cavity with the gel material for making the central column, the gel material is prevented from flowing out from the bottom of the roll core cavity or the outflow is reduced, so as to determine the gel material quantitatively, make it convenient to coagulate the gel material to form the central column, reduce the interference of the gel material to other positions on the electrode assembly, and moderately ensure high quality and performance of the manufactured battery cell.

According to a second aspect, an embodiment of this application provides a battery. The battery includes the battery cell disclosed in the above embodiment.

According to a third aspect, an embodiment of this application provides an electrical device. The electrical device contains the battery disclosed in the above embodiment.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

To describe the technical solutions in some embodiments of this application more clearly, the following outlines the drawings to be used in the description of some embodiments of this application or the exemplary technology. Evidently, the drawings outlined below are merely a part of embodiments of this application. A person of ordinary skill in the art may derive other drawings from such drawings without making any creative effort.
FIG. 1 is a schematic structural diagram of a vehicle according to some embodiments of this application;
FIG. 2 is a schematic exploded view of a battery according to some embodiments of this application;
FIG. 3 is a schematic exploded view of a battery cell according to some embodiments of this application;
FIG. 4 is a schematic structural diagram of a combination of an electrode assembly and a central column according to some embodiments of this application;
FIG. 5 is a schematic structural diagram of a combination of an electrode assembly and a central column according to some other embodiments of this application;
FIG. 6 is a schematic structural diagram of a combination of an electrode assembly and a central column according to still some other embodiments of this application;
FIG. 7 is a schematic structural diagram of a combination of an electrode assembly and a central column according to yet some other embodiments of this application;
FIG. 8 is a schematic structural diagram of a combination of an electrode assembly and a central column according to some embodiments of this application;
FIG. 9 is a schematic structural diagram of a combination of an electrode assembly and a central column according to some other embodiments of this application;
FIG. 10 is a schematic structural diagram of a combination of an electrode assembly and a central column according to still some other embodiments of this application;
FIG. 11 is a schematic structural diagram of a combination of an electrode assembly and a central column according to yet some other embodiments of this application;
FIG. 12 is a schematic structural diagram of a combination of an electrode assembly and a central column according to some embodiments of this application;
FIG. 13 is a schematic structural diagram of a combination of an electrode assembly and a central column according to some other embodiments of this application.

### List of reference numerals:

1000-vehicle; 1001-battery; 1002-controller; 1003-motor;
100-box; 101-first part; 102-second part;
200-battery cell; 21-electrode assembly; 210-roll core cavity; 211-first electrode plate; 212-second electrode plate; 213-separator; 214-reinforcement section; 22-central column; 23-shaping sleeve; 231-partition film; 232-elastic sleeve; 24-protection film; 31-housing; 41-end cap; 411-injection hole; 412-electrode terminal.

### DETAILED DESCRIPTION OF EMBODIMENTS

To make the technical problems to be solved by this application, technical solutions, and beneficial effects of this application clearer and more easily comprehensible, the following describes this application in further detail with reference to drawings and embodiments. Understandably, the specific embodiments described herein are merely intended to explain this application, but are not intended to limit this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of embodiments of this application, the technical terms "first" and "second" are merely intended to distinguish between different items but not intended to indicate or imply relative importance or implicitly specify the number of the indicated technical features, specific order, or order of precedence. Therefore, a feature defined with "first" or "second" may explicitly or implicitly include one or more of the features.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments in any appropriate manner.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces). Unless otherwise expressly specified, "several" means one or more.

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of embodiments of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

In the description of embodiments of this application, unless otherwise expressly specified and defined, a component referred to as being "fixed to" or "disposed on" another component may be directly positioned onto the other component or may be positioned onto the other component indirectly. A component referred to as "connected to" another component may be directly or indirectly connected to the other component.

In the description of embodiments of this application, unless otherwise expressly specified and defined, the technical term "neighboring" mean positional proximity. For example, among the three components A₁, A₂, and B, if the distance between A₁ and B is greater than the distance between A₂ and B, then A₂ is closer to B than A₁. In other words, A₂ neighbors B, or B neighbors A₂. For another example, when there are a plurality of components C, and the plurality of components C are C₁, C₂...C_{N}, if one of the components C, such as C₂, is closer to the component B than the other components C, then B neighbors C₂, or C₂ neighbors B.

In this application, a battery cell may be a lithium-ion secondary battery, a lithium-ion primary battery, a lithium-sulfur battery, a sodium-lithium-ion battery, a sodium-ion battery, a magnesium-ion battery, or the like, without being limited herein.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box moderately prevents liquid or other foreign matters from affecting the charging or discharging of a battery cell. In some cases, the battery cell may be applied directly, that is, the battery may include no box, which is not limited herein.

When a battery contains a plurality of battery cells, the plurality of battery cells may be connected in series, parallel, or series-and-parallel pattern. The series-and-parallel pattern means a combination of series connection and parallel connection of the plurality of battery cells. The plurality of battery cells may be directly connected in series, parallel, or series-and-parallel pattern, and then the whole of the plurality of battery cells may be accommodated in the box. Alternatively, to make up a battery, the plurality of battery cells may be connected in series, parallel, or series-and-parallel pattern to form a battery module first, and then a plurality of battery modules are connected in series, parallel, or series-and-parallel pattern to form a whole and accommodated in the box. The battery may further include other structures. For example, the battery may further include a busbar component configured to implement electrical connection between the plurality of battery cells.

The battery cell in an embodiment of this application includes an electrode assembly, an end cap, and a housing. The electrode assembly is mounted in the housing. The end cap fits on and covers the housing. An electrolyte solution is injected into the housing.

An electrode assembly is also referred to as a bare cell. The electrode assembly includes a positive electrode plate, a negative electrode plate, and a separator. The electrode assembly works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes beyond a part coated with the positive active material layer. The part, uncoated with the positive active material layer, of the positive current collector, serves as a positive tab. Alternatively, a metal conductor is welded onto the positive current collector and led out to serve as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes beyond a part coated with the negative active material layer. The part, uncoated with the negative active material layer, of the negative current collector, serves as a negative tab. Alternatively, a metal conductor is welded onto the negative current collector and led out to serve as a negative tab. The negative current collector may be made of copper, and a negative active material may be carbon, silicon, or the like. To moderately prevent a large electrical current from tripping the circuit, a plurality of positive tabs are disposed and stacked together, and a plurality of negative tabs are disposed and stacked together. Understandably, in an electrode assembly, the number of positive tabs may be one, and the number of negative tabs may be one. In other words, two groups of tabs are disposed on the electrode assembly. Each group includes at least one tab. One group of tabs is positive, and the other group of tabs is negative.

The electrode assembly may assume a jelly-roll structure. The jelly-roll structure is typically a structure formed by welding the tabs to the current collector, and then arranging the components in the order of "positive electrode plate-separator-negative electrode plate-separator", and then winding the components into a cylindrical shape. The separator may be made of a material such as Polypropylene (PP) or Polyethylene (PE). The separator is an insulation film disposed between the positive electrode plate and the negative electrode plate. The main function of the separator is to isolate the positive electrode from the negative electrode, and prevent the electrons in the battery from passing freely, so as to prevent short circuits, but allow the ions in the electrolyte solution to pass freely between the positive electrode and negative electrode to form a circuit between the positive electrode and the negative electrode. The positive electrode plate and the negative electrode plate are collectively referred to as electrode plates. The positive tab and the negative tab are collectively referred to as tabs.

After the electrode assembly is manufactured, the electrode assembly needs to be loaded into the housing and filled with an electrolyte solution so that the electrode assembly is immersed in the electrolyte solution and can amply absorb the electrolyte solution. The electrolyte solution can provide some active ions serving as conductive ions during charging and discharging. In addition, the electrolyte solution further provides an ion channel, or in other words, a carrier, so that the ions can move freely in the ion channel to implement electrical conduction between the electrode plates.

In a process of making a jelly-roll electrode assembly, a winding needle is usually used to grip the end of the electrode assembly and then wind the electrode plates into the electrode assembly. After the winding needle is withdrawn from the electrode assembly, a roll core cavity is formed at the center of the electrode assembly. Due to the existence of the roll core cavity, the structural strength at the center of the electrode assembly in use is low. In addition, during charging and discharging, the electrode assembly swells and shrinks, and the electrode assembly is prone to collapse at the center and other problems. The collapse of the electrode assembly is prone to cause detachment of the electrode plate from the separator and result in lithium dendrites problems such as lithium plating, or even short circuits, thereby impairing the service life of the battery.

Based on the above considerations, an embodiment of this application provides a battery cell. In the battery cell, a gel material is packed in a roll core cavity at the center of the electrode assembly to coagulate into a gel-state central column. The central column increases the structural strength of the electrode assembly. Moreover, when the electrode assembly swells and shrinks during charging and discharging, due to the elasticity of the gel-state central column, the central column can shrink with the expansion of the electrode assembly and swell with the shrinkage of the electrode assembly, thereby reducing the risk of central collapse of the electrode assembly and increasing the service life of the battery.

The battery cell disclosed in an embodiment of this application is applicable to an electrical device that uses a battery as a power supply and applicable to various energy storage systems that use a battery as an energy storage unit, for example, energy storage power supply systems such as hydropower, thermal power, wind power, and solar power stations. The electrical devices may be, but are not limited to, a mobile phone, a tablet, a notebook computer, an electric toy, an electric tool, an electric bicycle, an electric motorcycle, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description, a vehicle is used as an example of the electrical device provided in an embodiment of this application.

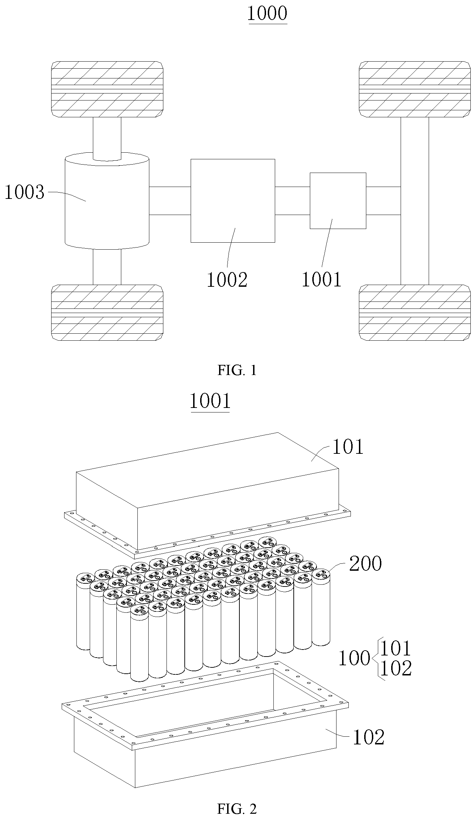

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 1001 is disposed inside the vehicle 1000. The battery 1001 may be disposed at the bottom, front, or rear of the vehicle 1000. The battery 1001 may be configured to supply power to the vehicle 1000. For example, the battery 1001 may serve as an operating power supply of the vehicle 1000. The vehicle 1000 may further include a controller 1002 and a motor 1003. The controller 1002 is configured to control the battery 1001 to supply power to the motor 1003, for example, to meet electrical energy requirements in starting, navigating, or running the vehicle 1000.

In some embodiments of this application, the battery 1001 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is a schematic exploded view of a battery 1001 according to some embodiments of this application. The battery 1001 includes a box 100 and a battery cell. The battery cell is accommodated in the box 100. The box 100 is configured to provide an accommodation space for the battery cell. The box 100 may be in various structures. In some embodiments, the box 100 may include a first part 101 and a second part 102. The first part 101 and the second part 102 fit and cover each other. The first part 101 and the second part 102 together define an accommodation space configured to accommodate the battery cell. The second part 102 may be a hollow structure opened at one end. The first part 101 may be a plate-like structure. The first part 101 fits the opening of the second part 102 so that the first part 101 and the second part 102 together define the accommodation space. Alternatively, both the first part 101 and the second part 102 may be hollow structures opened at one side. The opening of the first part 101 fits the opening of the second part 102. Definitely, the box 100 formed by the first part 101 and the second part 102 may be in various shapes, such as a cylinder or a cuboid. The plurality of battery cells are combined and connected in parallel, series, or series-and-parallel pattern, and then placed into the box 100 that is formed by snap-fitting the first part 101 and the second part 102 together.

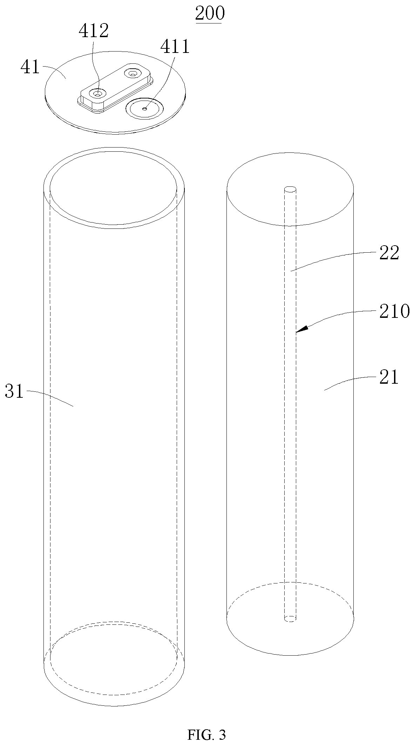

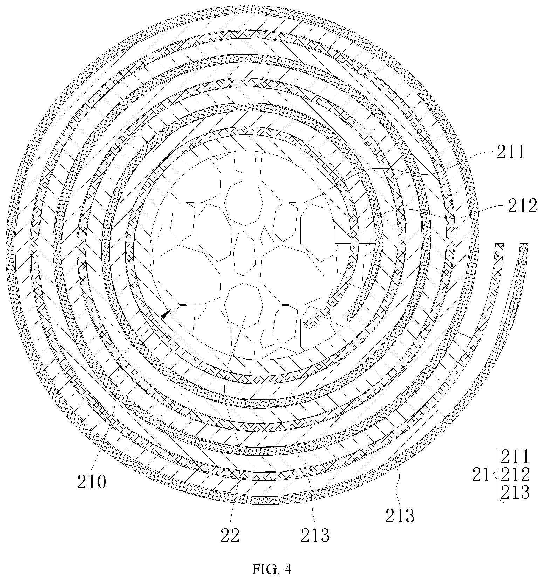

Referring to FIG. 3, FIG. 3 is a schematic structural exploded view of a battery cell 200 according to some embodiments of this application. Referring to FIG. 4 together, FIG. 4 is a schematic structural diagram of a combination of an electrode assembly 21 and a central column 22 according to some embodiments of this application.

The battery cell 200 includes an electrode assembly 21, an end cap 41, and a housing 31. The electrode assembly 21 is mounted in the housing 31. The end cap 41 fits on and covers the housing 31.

The end cap 41 is a component that caps off the opening of the housing 31 to isolate the internal environment of the battery cell 200 from the external environment. The shape of the end cap 41 may be adapted to the shape of the opening of the housing 31 to fit and cover the opening of the housing 31. Optionally, the end cap 41 may be made of a material of appropriate hardness and strength (such as aluminum alloy), so that the end cap 41 is not prone to deform when squeezed or impacted. In this way, the battery cell 200 achieves higher structural strength and higher safety performance. The end cap 41 may also be made of a variety of materials such as copper, iron, aluminum, stainless steel, aluminum alloy, or plastic, and the materials are not particularly limited herein.

The housing 31 is a component configured to fit the end cap 41 to form an internal environment of the battery cell 200. The formed internal environment may be used to accommodate the electrode assembly 21, an electrolyte solution, and other components. The housing 31 and the end cap 41 may be stand-alone components. An opening may be created on the housing 31. At the opening, the end cap 41 fits and covers the opening to form the internal environment of the battery cell 200. The housing 31 may be in various shapes and sizes, such as a cylinder, or hexagonal prism. Specifically, the shape of the housing 31 may be determined depending on the specific shape and size of the battery cell 200. The housing 31 may be made of a variety of materials such as copper, iron, aluminum, stainless steel, aluminum alloy, or plastic, without being particularly limited herein.

One or two end caps 41 may exist in the battery cell 200. If the housing 31 is a hollow structure opened at one end, one end cap 41 may be disposed accordingly. If the housing 31 is a hollow structure opened at both ends, two end caps 41 may be disposed accordingly. The two end caps 41 cap off the openings at the two ends of the housing 31 respectively.

As shown in FIG. 3, the battery cell 200 possesses a height direction. The height direction is a direction from the end cap 41 of the battery cell 200 to the bottom of the housing 31. The height direction of the battery cell 200 is also the height direction of both the electrode assembly 21 and the housing 31.

The electrode assembly 21 includes a first electrode plate 211, a second electrode plate 212, and a separator 213. The first electrode plate 211 and the second electrode plate 212 are stacked up. The separator 213 is configured to separate the first electrode plate 211 from the second electrode plate 212. In other words, the first electrode plate 211, the separator 213, the second electrode plate 212, and the separator 213 are stacked in sequence and wound along the winding direction to form a jelly-roll structure. During the winding, a roll core cavity 210 is formed at the center of the electrode assembly 21.

The first electrode plate 211 and the second electrode plate 212 are of opposite polarities. Understandably, of the first electrode plate 211 and the second electrode plate 212, one is a positive electrode plate, and the other is a negative electrode plate. For example, when the first electrode plate 211 is a negative electrode plate, the second electrode plate 212 is a positive electrode plate; when the first electrode plate 211 is a positive electrode plate, the second electrode plate 212 is a negative electrode plate.

The battery cell 200 further includes a central column 22. The central column 22 is in a gel state. For example, the gel material for making the gel-state central column 22 may be packed in the roll core cavity 210, and coagulate to form a gel-state central column 22. In this way, the central column 22 can fill the roll core cavity 210 to support the electrode assembly 21 properly and increase the structural strength of the electrode assembly 21. The gel-state central column 22 possesses elastic properties. When the electrode assembly 21 is squeezed, the central column 22 can play a role in supporting the center of the electrode assembly 21, thereby effectively reducing or eliminating the probability that the electrode assembly 21 is squeezed and deformed, and improving the deformation resistance of the electrode assembly 21. In addition, during the charging and discharging of the electrode assembly 21, when the electrode assembly 21 swells or shrinks, the central column 22 can shrink with the expansion of the electrode assembly 21 and swell with the shrinkage of the electrode assembly 21, thereby reducing the risk of central collapse of the electrode assembly 21 and increasing the service life of the battery.

In an embodiment of this application, the central roll core cavity 210 formed by winding the electrode assembly 21 is packed with the gel material that coagulates to form a gel-state central column 22. In this way, the central column 22 can support the electrode assembly 21 after coagulating in shape, thereby improving the deformation resistance of the electrode assembly 21, and reducing the risk of central collapse of the electrode assembly 21. In addition, when the electrode assembly 21 is squeezed, the central column 22 can serve as an elastic cushion to some extent. Moreover, when the electrode assembly 21 swells and squeezes during charging and discharging, the central column 22 can adapt to the compression deformation of the electrode assembly 21, thereby further improving the deformation resistance of the electrode assembly 21, and in turn, reducing the risk of central collapse and deformation of the electrode assembly 21, and effectively increasing the service life of the battery cell 200.

In some embodiments, a pressure relief mechanism configured to release an internal pressure when the internal pressure or temperature of the battery cell 200 reaches a threshold may be further disposed on the end cap 41.

In some embodiments, an injection hole 411 may be created on the end cap 41 to facilitate injection of the electrolyte solution into the housing 31. Understandably, the injection hole may be created on the housing 31 instead, without being limited herein.

In some embodiments, an electrode terminal 412 may be disposed on the end cap 41. The electrode terminal 412 is a conductive piece on the end cap 41. The electrode terminal 412 is configured to be electrically connected to the tab of the electrode assembly 21, so as to output electrical energy of the battery cell 200. The electrode terminal 412 may be directly or indirectly connected to the tab of the electrode assembly 21.

In some embodiments, in the same coil along the winding direction, the first electrode plate 211 may be positioned more internally than the second electrode plate 212. In other words, the first electrode plate 211 is positioned further inside relative to the second electrode plate 212 along the radial direction of the electrode assembly 21. Definitely, in some other embodiments, the first electrode plate 211 may be positioned further outside relative to the second electrode plate 212 instead. Generally, the electrode plate positioned inside is more prone to form the above roll core cavity 210 during winding. Alternatively, the starting end of the electrode plate positioned outside along the winding direction may extend out to form a roll core cavity 210 by winding.

In some embodiments, the wound electrode assembly 21 may be placed in the housing 31 to facilitate injection of a semi-cured gel material into the roll core cavity 210. In this way, because the semi-cured gel material is of some fluidity, the gel material can be easily injected to the roll core cavity 210. However, the fluidity of the semi-cured gel material is relatively low. After being injected into the roll core cavity 210, the semi-cured gel material is moderately obstructed by the electrode assembly 21 from flowing out and interfering with other positions on the electrode assembly 21, and then coagulates to form a gel-state central column 22.

The gel material may be a mixture of a polymer monomer and an initiator. A polymer means a substance polymerized from micromolecules through a polymerization reaction, and is also referred to as a macromolecular compound. The micromolecules that make up a polymer through synthesis are referred to as monomers of the polymer. A polymer monomer (monomer for short) is a generic term for micromolecules that can polymerize with the same type of or other types of molecules, and means simple compounds that can combine into a macromolecular compound through polymerization reactions or polycondensation reactions, and is a micromolecular feedstock used for synthesizing a polymer. An initiator, also known as a free radical initiator, means a type of compounds that are easily pyrolyzed into free radicals (that is, primary free radicals), and may be used to initiate free radical polymerization and copolymerization reactions of olefin monomers and diene monomers, or initiate crosslinking and curing of unsaturated polyesters as well as crosslinking reactions of macromolecules. Polymer monomers include, but are not limited to, one or more of methyl methacrylate, methyl acrylate, ethyl methacrylate, ethyl acrylate, n-butyl methacrylate, butyl acrylate, n-octyl methacrylate, n-octyl acrylate, vinyl acetate, vinylene carbonate, vinyl ethylene carbonate, triethylene glycol dimethacrylate, diethylene glycol dimethacrylate, ethylene glycol dimethacrylate, allyl methacrylate, divinylbenzene, polyvinyl alcohol, styrene, and the like. Initiators include, but are not limited to, one or more of a persulfate salt, an azo-based initiator, an organic peroxide initiator, and the like.

In some embodiments, the volume of a swollen electrode assembly 21 can be calculated, that is, the volume of the swollen electrode assembly 21 is constant, and the volume of the non-swollen electrode assembly 21 is also constant. Therefore, the total volume in the housing 31 is constant. The volume of the roll core cavity 210 of the swollen electrode assembly 21 can be calculated directly. In other words, the volume of the space corresponding to the height of the electrode assembly 21 in the housing 31 minus the total volume of the swollen electrode assembly 21 is the volume of the roll core cavity 210 of the swollen electrode assembly 21. In other words, the amount of the gel material added into the roll core cavity 210 can be quantitatively calculated, thereby improving the filling accuracy. Understandably, the amount of the gel material added may be appropriately greater than the volume of the roll core cavity 210 of the swollen electrode assembly 21, so as to moderately ensure that the central column 22 can amply fill the roll core cavity 210 of the swollen electrode assembly 21. The amount of the gel material needs to be smaller than the volume of the roll core cavity 210 of the non-swollen electrode assembly 21. In this way, after the electrode assembly 21 swells, the overflow amount of the gel material squeezed out by the electrode assembly 21 can be reduced, thereby moderately avoiding interference with other positions on the electrode assembly 21 and improving the performance of the battery cell 200.

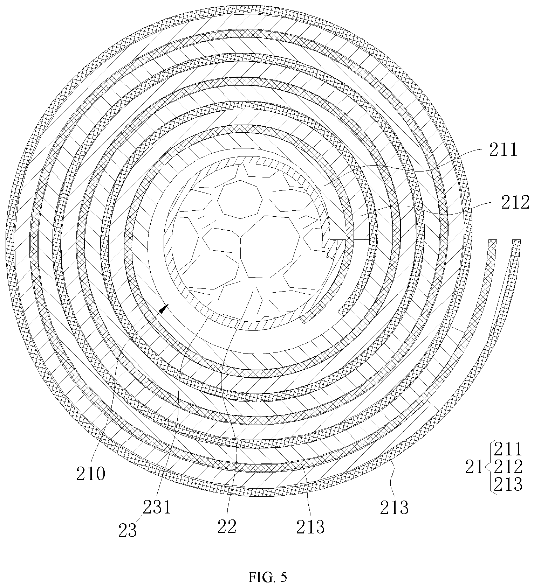

In some embodiments, referring to FIG. 5, FIG. 5 is a schematic structural diagram of a combination of an electrode assembly 21 and a central column 22 according to some embodiments of this application. The battery cell 200 further includes a shaping sleeve 23. The shaping sleeve 23 is disposed in the roll core cavity 210. The central column 22 is disposed in the shaping sleeve 23. The shaping sleeve 23 is configured to constrain the gel material in the roll core cavity 210, so as to shape the gel material, moderately prevent the gel material from flowing out, and facilitate the gel material to coagulate into a gel-state central column 22. Understandably, during production, the gel material may be injected into the shaping sleeve 23. Due to the constraining effect of the shaping sleeve 23, the gel material is prevented from flowing out, thereby not only facilitating the gel material to coagulate to form the central column 22 and facilitating production, but also moderately preventing the gel material from interfering with other positions on the electrode assembly 21, reducing the interference of the gel material to other positions on the electrode assembly 21, and moderately ensuring the quality and performance of the manufactured battery cell 200.

In some embodiments, referring to FIG. 5, the shaping sleeve 23 includes a partition film 231. The partition film 231 is affixed to the inner surface of the roll core cavity 210. The partition film 231 is a film structure configured to partition the roll core cavity 210 from the electrode assembly 21. The partition film 231 is affixed to the inner surface of the roll core cavity 210 to form a shaping sleeve 23 and partition the roll core cavity 210 from the electrode assembly 21. The partition film 231 moderately prevents the gel material from flowing out. In a winding process during the manufacture of this structure, the partition film 231 may be wound around the winding needle into at least one coil before the electrode assembly 21 is wound. Alternatively, the partition film 231 may be disposed at an end of the electrode assembly 21. During winding, the partition film 231 is directly affixed to the inner surface of the roll core cavity 210. The partition film 231 is affixed to the inner surface of the roll core cavity 210 to moderately avoid or reduce the outflow of the gel material. The production is convenient, and the space occupied by the partition film 231 is small. In this way, when the volume of the roll core cavity 210 is constant, the volume of the electrode assembly 21 can be made larger, thereby increasing the energy density of the battery cell 200. When the volume of the electrode assembly 21 is constant, the roll core cavity 210 can be made larger. In this way, the diameter of the central column 22 can be made larger, so as to increase the structural strength of the central column 22, and in turn, improve the deformation resistance of the electrode assembly 21.

In some embodiments, referring to FIG. 5, the partition film 231 possesses a property of resistance to penetration by an electrolyte solution. In other words, after the electrolyte solution is injected, the partition film 231 can prevent the electrolyte solution from entering the roll core cavity 210, thereby reducing or moderately eliminating the possibility that the electrolyte solution in the battery cell 200 enters the roll core cavity 210, and in turn, reducing or moderately eliminating the possibility that the electrolyte solution interferes with the central column 22, and moderately ensuring a high deformation resistance of the electrode assembly 21.

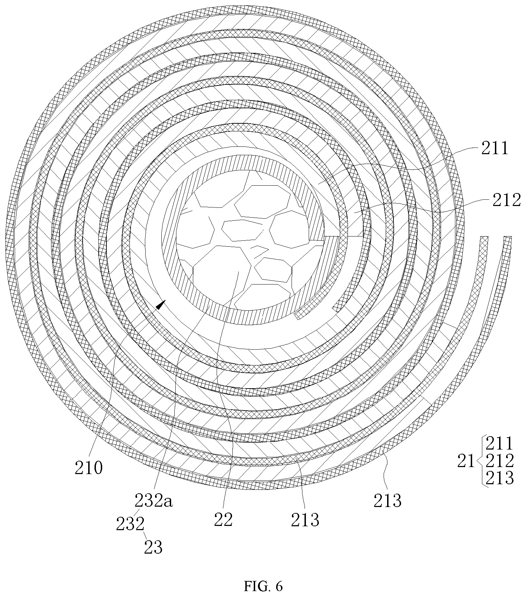

In some embodiments, referring to FIG. 6, FIG. 6 is a schematic structural diagram of a combination of an electrode assembly 21 and a central column 22 according to some embodiments of this application. The shaping sleeve 23 includes an elastic sleeve 232. The elastic sleeve 232 is disposed in the roll core cavity 210. The elastic sleeve 232 is a cylindrical or sleeve-shaped structure of some elasticity. With the elastic sleeve 232 disposed in the roll core cavity 210, the elastic sleeve 232 constrains the gel material for making the central column 22, so as to moderately avoid or reduce the outflow of the gel material, and coagulate the gel material to form the central column 22. In this way, the central column 22 and the elastic sleeve 232 can act as a whole to support the electrode assembly 21. Further, when the electrode assembly 21 swells or shrinks during charging and discharging of the electrode assembly 21, the central column 22 shrinks with the expansion of the electrode assembly 21, and swells with the shrinkage of the electrode assembly 21, so as to adapt to the expansion or compression deformation of the electrode assembly 21, improve the deformation resistance of the electrode assembly 21, reduce the risk of central collapse of the electrode assembly 21, and moderately ensure a long service life of the battery cell 200.

In some embodiments, a metal sleeve may be used as the elastic sleeve 232. Because the diameter of the roll core cavity 210 is relatively small, when an elastic sleeve 232 is used, the sidewall of the elastic sleeve 232 is relatively thin. When a metal sleeve with a relatively thin sidewall is used, the metal sleeve is also of some elasticity. In other words, the metal sleeve can also be used as the elastic sleeve 232. In addition, when a metal sleeve is used as the elastic sleeve 232, high structural strength is moderately ensured, and moreover, the metal sleeve can be made relatively thin, so as to reduce the space occupied by the metal sleeve. In this way, when the volume of the roll core cavity 210 is constant, the volume of the electrode assembly 21 can be made larger, thereby increasing the energy density of the battery cell 200. When the volume of the electrode assembly 21 is constant, the roll core cavity 210 can be made larger. In this way, the diameter of the central column 22 can be made larger, so as to increase the structural strength of the central column 22, and in turn, improve the deformation resistance of the electrode assembly 21.

In some embodiments, a plastic sleeve may be used as the elastic sleeve 232. In other words, the plastic sleeve used as an elastic sleeve 232 is cost-effective and easy to manufacture.

In some embodiments, referring to FIG. 6, a cross-section of the elastic sleeve 232a is spiral. In other words, the elastic sleeve 232a is in a spiral shape. When the electrode assembly 21 swells and squeezes, the volume of the roll core cavity 210 becomes smaller, and the elastic sleeve 232a can deform and shrink more adaptively. When the electrode assembly 21 shrinks, the volume of the roll core cavity 210 becomes larger, and the elastic sleeve 232a can deform and expand more adaptively to adapt to the swelling, squeezing, shrinkage, and stretch of the electrode assembly 21, thereby reducing the interference caused to the electrode assembly 21, and in turn, moderately ensuring a high level of performance and lifespan of the battery cell 200.

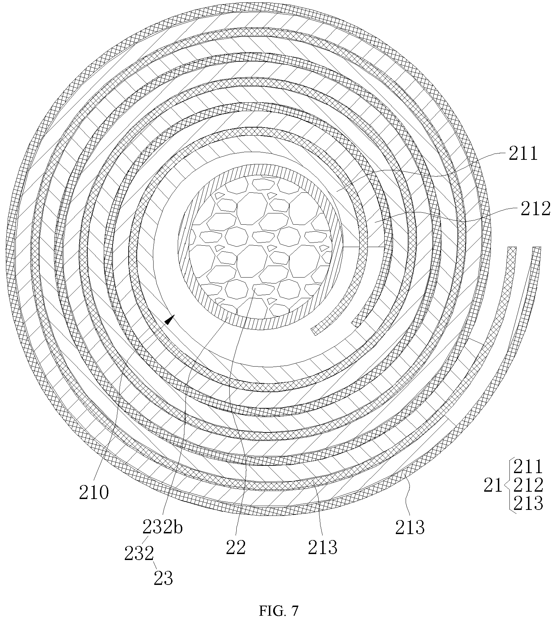

In some embodiments, referring to FIG. 7, FIG. 7 is a schematic structural diagram of a combination of an electrode assembly 21 and a central column 22 according to some embodiments of this application. The elastic sleeve 232b may assume a cylindrical structure instead to facilitate processing and assembling. For example, a cylindrical elastic sleeve 232b may be directly produced by processing, and put on the winding needle before start of winding.

In some embodiments, when a shaping sleeve 23 is used, the inner diameter of the shaping sleeve 23 is less than the inner diameter of the roll core cavity 210 of the non-swollen electrode assembly 21, and the inner diameter of the shaping sleeve 23 is greater than or equal to the inner diameter of the roll core cavity 210 of the swollen electrode assembly 21. The electrode assembly 21 swells and deforms in a process of absorbing the electrolyte solution and during charging and discharging. When the electrode assembly 21 is mounted in the housing 31, the electrode assembly 21 is not fully activated by charging and discharging. At this time, the electrode assembly 21 has not swelled or deformed, and the volume of the roll core cavity 210 inside is relatively large. After the electrode assembly 21 swells and deforms, the roll core cavity 210 inside the electrode assembly shrinks. The inner diameter of the shaping sleeve 23 is less than the inner diameter of the roll core cavity 210 of non-swollen the electrode assembly 21, so as to facilitate direct mounting of the shaping sleeve 23 in the roll core cavity 210, thereby providing an expansion space when the electrode assembly 21 swells during charging and discharging. Especially, after the shaping sleeve 23 constrains the gel material and facilitates the gel material to coagulate into the central column 22, the battery cell 200 is moderately prevented from bulging due to an excessive reverse force exerted by the central column 22 on the electrode assembly 21. By setting the inner diameter of the shaping sleeve 23 to be greater than or equal to the inner diameter of the roll core cavity 210 of the swollen electrode assembly 21, the battery cell 200 can be moderately prevented from bulging due to the excessive reverse force exerted by the central column 22 on the electrode assembly 21. After the shaping sleeve 23 constrains the gel material and facilitates the gel material to coagulate into the central column 22, the shaping sleeve 23 and the central column 22 as a whole can fill the roll core cavity 210 amply, so as to support the electrode assembly 21 and moderately ensure a high deformation resistance of the electrode assembly 21.

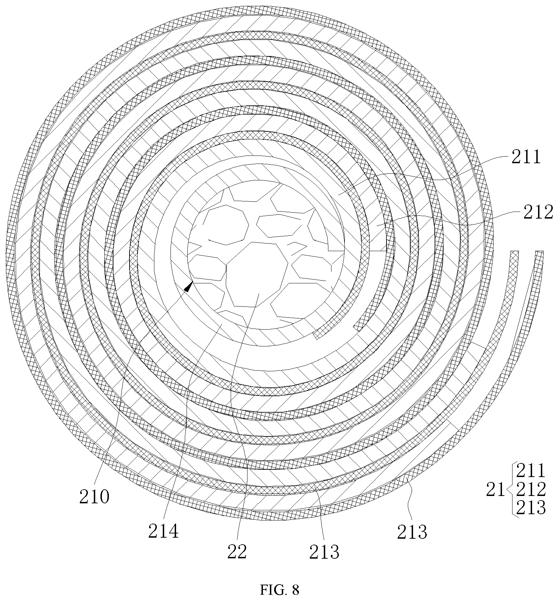

In some embodiments, referring to FIG. 8, FIG. 8 is a schematic structural diagram of a combination of an electrode assembly 21 and a central column 22 according to some embodiments of this application. A reinforcement section 214 is disposed on the first electrode plate 211. The reinforcement section 214 is wound around to form a roll core cavity 210. The reinforcement section 214 is disposed on the first electrode plate 211, and the reinforcement section 214 is wound to form the roll core cavity 210, so that the reinforcement section 214 can increase the structural strength of the center of the electrode assembly 21 and improve the deformation resistance of the electrode assembly 21. Moreover, the reinforcement section 214 can moderately eliminate or reduce the probability that the gel material flows out of the roll core cavity 210, thereby making it convenient for the gel material to coagulate into a central column 22. Further, the reinforcement section coordinates with the central column 22 to improve the deformation resistance of the electrode assembly 21.

In some embodiments, the reinforcement section 214 is wound into at least one coil. In this way, the roll core cavity 210 formed by winding the reinforcement section 214 forms a circumferential closed loop structure, so as to moderately ensure that the roll core cavity 210 formed by winding the reinforcement section 214 can constrain the gel material properly. The reinforcement section 214 wound into a plurality of coils not only constrains the gel material but also increases the deformation resistance of the electrode assembly 21.

In some embodiments, referring to FIG. 8, in the same coil of the electrode assembly 21, the first electrode plate 211 is positioned more internally than the second electrode plate 212. In other words, in the same coil along the winding direction, the first electrode plate 211 may be positioned more internally than the second electrode plate 212. Due to absence of the reinforcement section 214 on the first electrode plate 211, the arrangement of the first electrode plate 211 positioned more internally than the second electrode plate 212 makes the reinforcement section 214 closer to the inside of the electrode assembly 21, thereby not only making it convenient for the reinforcement section 214 to wind into a roll core cavity 210, but also reducing the footprint of the reinforcement section 214. In this way, in the winding process, when the dimensions of the winding needle are constant, the volume of the roll core cavity 210 is constant. In this way, the volume of the electrode assembly 21 can be made larger, thereby increasing the energy density of the battery cell 200. When the volume of the electrode assembly 21 is constant, the roll core cavity 210 can be made larger. In this way, the diameter of the central column 22 can be made larger, so as to increase the structural strength of the central column 22, and in turn, improve the deformation resistance of the electrode assembly 21.

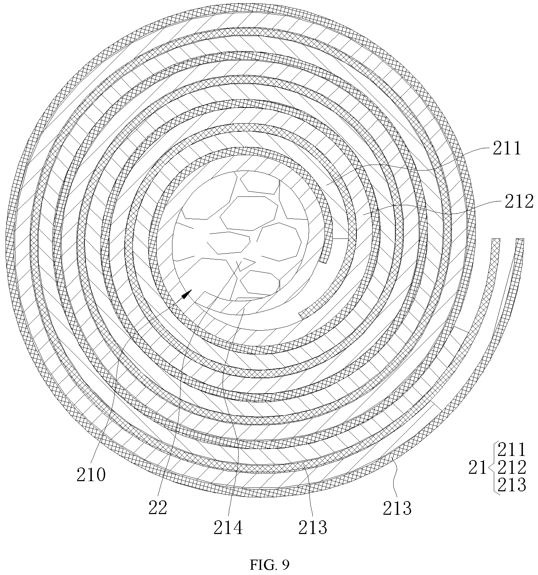

In some embodiments, referring to FIG. 9, FIG. 9 is a schematic structural diagram of a combination of an electrode assembly 21 and a central column 22 according to some embodiments of this application. Alternatively, in the same coil of the electrode assembly 21, the first electrode plate 211 may be positioned more externally than the second electrode plate 212. In other words, in the same coil along the winding direction, the first electrode plate 211 may be positioned more externally than the second electrode plate 212. In this case, the reinforcement section 214 on the first electrode plate 211 can be wound into a roll core cavity 210.

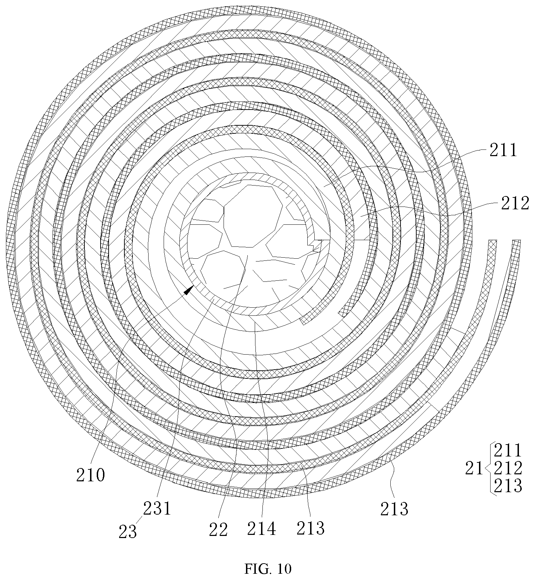

In some embodiments, referring to FIG. 10, FIG. 10 is a schematic structural diagram of a combination of an electrode assembly 21 and a central column 22 according to some embodiments of this application. The reinforcement section 214 may be disposed on the first electrode plate 211 of the electrode assembly 21 at the same time, so as to form a roll core cavity 210 by winding. In addition, a shaping sleeve 23 may be disposed in the roll core cavity 210. For example, a partition film 231 is affixed to the inner surface of the roll core cavity 210 formed by the reinforcement section 214, so as to form the shaping sleeve 23 and partition the roll core cavity 210 from the electrode assembly 21. The partition film 231 prevents the gel material from flowing out, and makes it convenient to create a gel-state central column 22 in the roll core cavity 210.

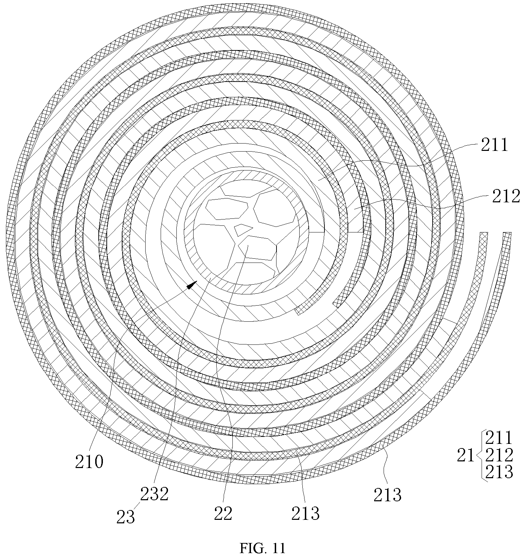

In some embodiments, referring to FIG. 11, FIG. 11 is a schematic structural diagram of a combination of an electrode assembly 21 and a central column 22 according to some embodiments of this application. For example, an elastic sleeve 232 is disposed in the roll core cavity 210 formed by the reinforcement section 214, so as to moderately prevent the gel material from flowing out, and make it convenient to create a gel-state central column 22 in the roll core cavity 210.

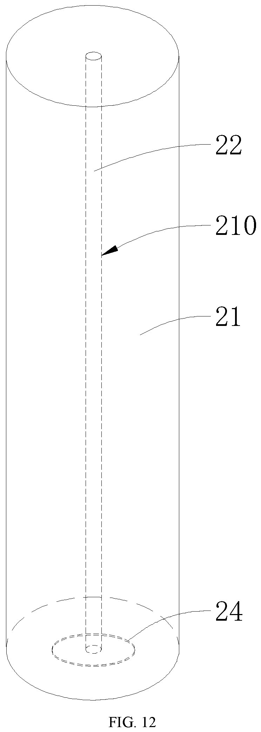

In some embodiments, referring to FIG. 12, FIG. 12 is a schematic structural diagram of a combination of an electrode assembly 21 and a central column 22 according to some embodiments of this application. The battery cell 200 further includes a protection film 24. The protection film 24 is a film structure affixed to the bottom of the electrode assembly 21. The protection film 24 is affixed to the bottom of the electrode assembly 21, so as to cover the bottom of the roll core cavity 210. In this way, in a process of packing the roll core cavity 210 with the gel material for making the central column 22, the gel material is moderately prevented from flowing out from the bottom of the roll core cavity 210 or the outflow is reduced, so as to determine the gel material quantitatively, make it convenient to coagulate the gel material to form the central column 22, reduce the interference of the gel material to other positions on the electrode assembly 21, and moderately ensure high quality and performance of the manufactured battery cell 200.

In some embodiments, the protection film 24 may be affixed to a bottom face of the electrode assembly 21 to cover the bottom of the roll core cavity 210, so that the occupied space is small.

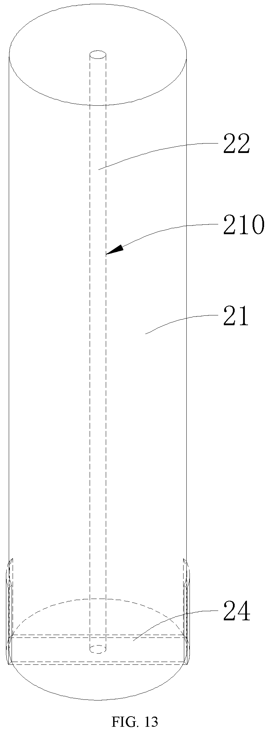

In some embodiments, referring to FIG. 13, FIG. 13 is a schematic structural diagram of a combination of an electrode assembly 21 and a central column 22 according to some embodiments of this application. When the battery cell 200 includes a protection film 24, the protection film 24 may be affixed to the bottom of the electrode assembly 21, and both ends of the protection film 24 are affixed to the lateral sides of the electrode assembly 21, so as to increase the connection strength between the protection film 24 and the electrode assembly 21.

According to some embodiments of this application, this application further provides a battery. The battery includes the battery cell 200 disclosed in any one of the above technical solutions.

According to some embodiments of this application, this application further provides an electrical device. The electrical device includes the battery disclosed in any one of the above technical solutions.

The electrical device may be any device or system described above in which the battery is applied.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, **characterized in that** the battery cell comprises an electrode assembly, the electrode assembly is wound along a winding direction to form a jelly-roll structure containing a roll core cavity in a central region, and the battery cell further comprises a gel-state central column packed in the roll core cavity and formed by coagulation.

2. The battery cell according to claim 1, **characterized in that** the battery cell further comprises a shaping sleeve, the shaping sleeve is configured to shape a gel material packed in the roll core cavity to form the central column, the shaping sleeve is disposed in the roll core cavity, and the central column is disposed in the shaping sleeve.

3. The battery cell according to claim 2, **characterized in that** the shaping sleeve comprises a partition film affixed to an inner surface of the roll core cavity.

4. The battery cell according to claim 3, **characterized in that** the partition film possesses a property of resistance to penetration by an electrolyte solution.

5. The battery cell according to claim 2, **characterized in that** the shaping sleeve comprises an elastic sleeve, and the elastic sleeve is disposed in the roll core cavity.

6. The battery cell according to claim 5, **characterized in that** the elastic sleeve is a metal sleeve or a plastic sleeve.

7. The battery cell according to claim 5, **characterized in that** a cross-section of the elastic sleeve is spiral or ring-shaped.

8. The battery cell according to any one of claims 2 to 7, **characterized in that** an inner diameter of the shaping sleeve is less than an inner diameter of the roll core cavity of the non-swollen electrode assembly, and the inner diameter of the shaping sleeve is greater than or equal to the inner diameter of the roll core cavity of the swollen electrode assembly.

9. The battery cell according to any one of claims 1 to 7, **characterized in that** the electrode assembly comprises a first electrode plate and a second electrode plate opposite to each other in polarity and stacked up, and a separator configured to separate the first electrode plate from the second electrode plate; and a reinforcement section is disposed on the first electrode plate, and the reinforcement section is wound around to form the roll core cavity.

10. The battery cell according to claim 9, **characterized in that** the reinforcement section is wound into at least one coil.

11. The battery cell according to claim 9, **characterized in that** in a same coil of the electrode assembly, the first electrode plate is positioned more internally than the second electrode plate.

12. The battery cell according to any one of claims 1 to 7, **characterized in that** the battery cell further comprises a protection film affixed to a bottom of the electrode assembly to cover the roll core cavity.

13. A battery, **characterized in that** the battery comprises the battery cell according to any one of claims 1 to 12.

14. An electrical device, **characterized in that** the electrical device comprises the battery according to claim 13.
